# EUROPEAN PATENT APPLICATION

(11) **EP 4 782 337 A2**
(43) Date of publication of application: **29.07.2026**
(21) Application number: 26184205.8
(22) Date of filing: 23.09.2024
(51) Int. Cl.: B64D 11/06

(54) **LIGHTWEIGHT SEAT FOR HIGH-DENSITY CONFIGURATION AND CLUSTER OF ADJACENT SEAT FOR HIGH-DENSITY CONFIGURATIONS**

(62) Divisional of application: 24383016.3
(71) Applicant: Inmuebles Molí, SL, 08107 Martorelles (ES)
(72) Inventor: SINGLA CASASAYAS, Joan, 08107 Martorelles / (ES)
(74) Representative: Torner, Juncosa I Associats, SL

(57) **Abstract**

Lightweight seat for high-density configurations and cluster of adjacent seat, the seat comprising a support structure (10) supporting a seat pan (20) comprising a rigid shell (21), a lining (23) and an intermediate foam (22), and a backrest (30), wherein most of the rear portion (20A) of the seat pan (20), covering at least one rear third thereof, and at least left and right rear corner regions (20L, 20R) contained within a 10cm radius from the left and right rear corners, have a thickness equal to or less than 25mm or 15mm, and in a front portion (20B) of the seat pan, covering at least a front third thereof, the rigid shell (21) defines a descending slope of at least 15° towards a front edge of the seat pan (20) and the intermediate foam (22) defines a wedge of at least 15°.

## Description

### Technical field

The present invention concerns to a lightweight seat for high-density configuration, and also to a cluster of adjacent seats for such high-density configurations.

A cluster of adjacent seats is an aggrupation of several laterally adjacent seats sharing some elements, such the support structure providing attachment to the floor or the armrests, to reduce its weight.

**It** will be understood that a high-density configuration is an arrangement of multiples rows or multiples lines and rows of seats or of clusters of adjacent seats, in an optimized manner to achieve a high density of passengers in a given available space. The present invention is directed to an improved seat or cluster of seats integrating features directed to increase the comfort of the passengers despite the limited available space, particularly the available space for knees and legs.

### Background of the Invention

Seats for high-density configurations are already known. Those seats have a reduced thickness of the backrest to increase the available space for the knees of the user.

**It** is also known, for example through document US4018477A, a seat where the front portion of the seat pan can tilt downwards, through a mechanism integrated in the seat, for lowering and extending the legs.

Despite the above, the tilting mechanism is expensive, heavy and prone to fail, increasing the maintenance costs and the fuel cost due to the increased weight. Also, these known documents do not provide any solution to further increase the available space for the knees of the user, beyond the reduction in thickness of the backrest.

The present invention solves the above and other problems in a cheap, light, resistant and therefore cost-effective manner.

### Description of the Invention

The present invention concerns to a lightweight seat for high-density configurations, as defined in claim 1.

The proposed lightweight seat for high-density configurations, comprises, as already known in the available prior art, a support structure supporting a seat pan and a backrest; wherein the seat pan comprises a rigid shell, a lining and an intermediate foam between the rigid shell and the lining.

The seat pan is the part of the seat, mostly horizontal, intended to receive and support the user's buttocks when seated, and the backrest is the part of the seat, mostly vertical, intended to receive and support the user's back when seated.

The rigid shell is a shell, for example made of plastic or lightweight metal such aluminum, that provides support for the intermediate foam that forms the cushion of the seat pan.

The seat pan can be divided between a rear portion covering at least one rear third of the seat pan in a horizontal direction, adjacent to the backrest, and a front portion, covering at least a front third of the seat pan in the horizontal direction, away from the backrest.

According to the above, if the seat pan is divided in three equally dimensioned horizontal bands, the band closer to the backrest is the rear portion mentioned above, and the band farthest away from the backrest is the front portion.

**It** will be understood that the orientations horizontal and vertical are referred to horizontal and vertical directions when the seat is fixed on a horizontal floor. Similarly, the directions rear, front, left and right are orientations relative with respect to a user seated on the seat.

The seat pan has an average vertical thickness equal to or less than 25mm, or equal to or less than 15mm in at least most of the surface of the rear portion of the seat pan, and/or in at least left and right rear corner regions contained within a radius of at least 10cm from the left and right rear corners of the seat pan.

Preferably, said average vertical thickness, in the corner regions, can be equal o smaller than 12mm.

The left and right rear corners of the seat pan are the rear corners of the seat pan, adjacent to the backrest, located to the right and left sides of the seat.

All the portions of the seat pan contained within a radius of 10cm from each of said left and right rear corners are the left and right corner regions.

These left and right corner regions are regions where a user sitting on the seat applies little pressure, so padding in these regions is less necessary, and a reduced thickness can be achieved.

The reduced thickness of the seat pad in this particular region is beneficial because frees up more space bellow the seat pan on those left and right regions, facilitating the insertion of the knees of a passenger seated in a rear row of seats under the seat pan.

The backrest is articulated around an articulation joint. The articulation joint of the backrest is located at a distance of between 100mm and 180mm, or between 120mm and 160mm above the upper surface of the seat pan (20).

A front portion of the seat pan, covering at least a front third, or at least a front half, of the seat pan in the horizontal direction, is a collapsible portion of the seat pan, including a collapsable configuration, adapted to be collapsable under the weight of a user of the seat.

The present invention also proposes to optionally define, on the rigid shell of the front portion of the seat pan, a descending slope forming an angle of at least 15° regards the horizontal towards a front edge of the seat pan.

The intermediate foam defines a wedge of at least 15°, filling the increasing distance between the lining and the descending slope of the rigid shell, so that the upper surface of the seat pan, defined by the lining, remains mostly flat, while the rigid shell defines the mentioned descending slope.

The intermediate foam fills the space between the lining and the descending slope of the rigid shell with a soft material and easily collapsible under the weight of the user of the seat.

This allows the user to rest their weight on the rear portion of the seat pan, keeping the back fully reclined on the backrest, while lowering the legs and knees by collapsing the collapsible portion of the seat pan.

The lowered knee height, without moving the buttocks forward over the seat pan, combined with the reduced thickness of the front row seat, allows the knees to be partially housed under the front row seat, increasing passenger comfort without the need to increase the distance between the rows of seats.

The proposed seats can be used in passenger vehicles, especially aircrafts, but also in other vehicles such as trains or buses, as well as in stationary applications such as auditoriums, cinemas, theaters, classrooms, etc.

**It** will be understood that references to geometric position, such as parallel, perpendicular, tangent, etc. allow deviations up to ± 5° from the theoretical position defined by this nomenclature.

### Brief description of the Figures

The foregoing and other advantages and features will be more fully understood from the following detailed description of an embodiment with reference to the accompanying drawings, to be taken in an illustrative and non-limitative manner, in which:

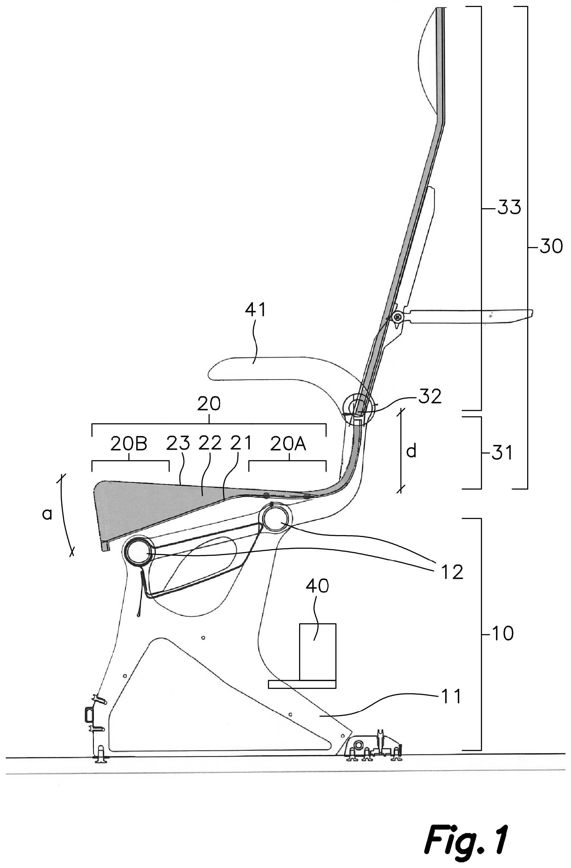

Fig. 1 shows a lateral section view of the seat, sectioned for its center;

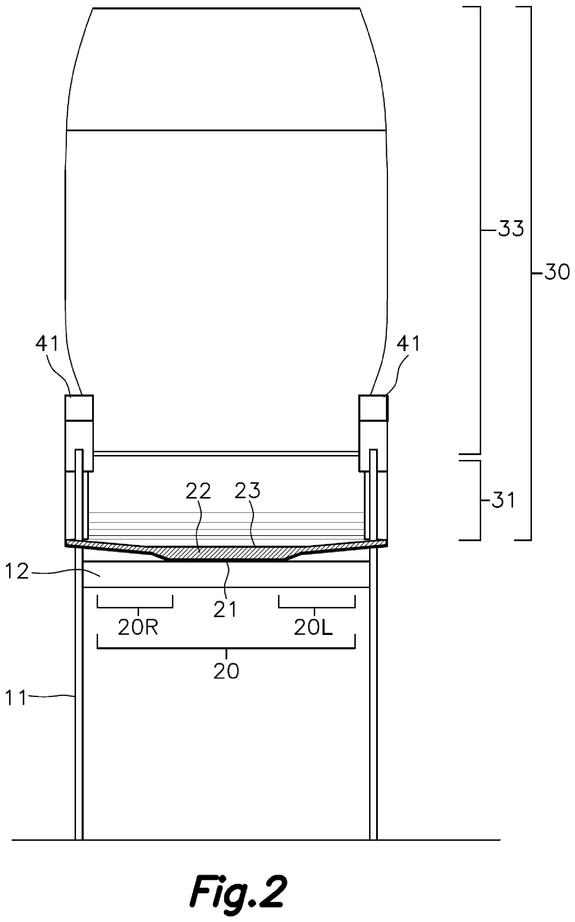

Fig. 2 shows a frontal section view of the seat sectioned through the rear portion of the seat pan;

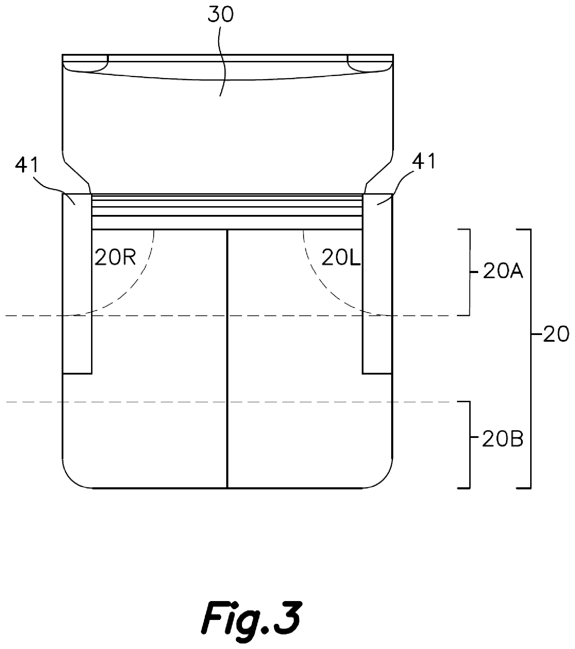

Fig. 3 shows a top view of the seat;

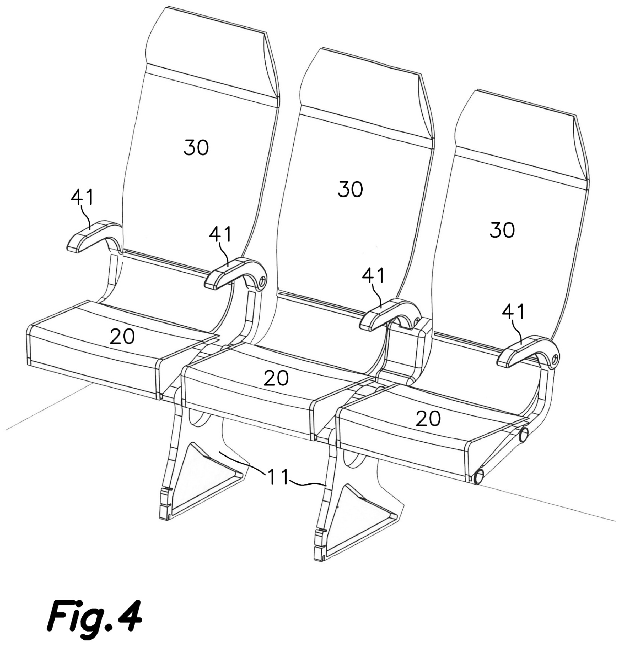

Fig. 4 shows a perspective view of a cluster of three seats.

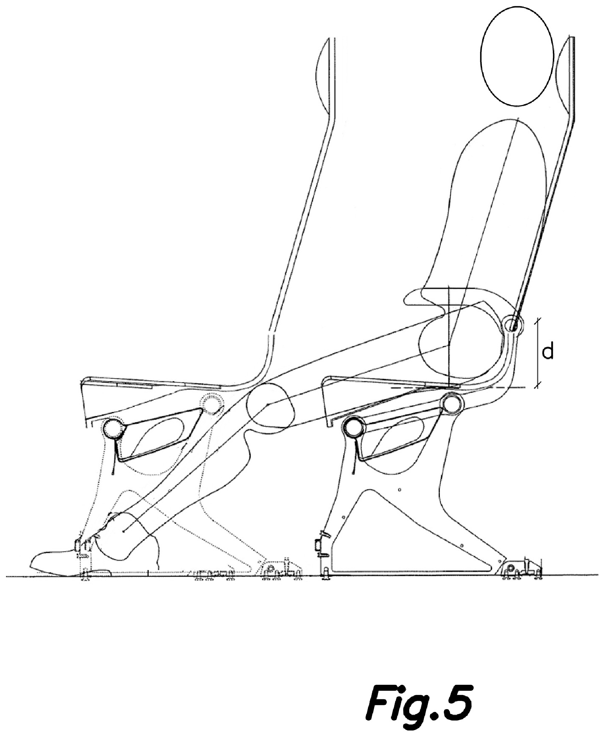

Fig. 5 shows a schematic lateral view of two successive rows of seats situated in close proximity, showing how the user of the back row can introduce the knees below the front row.

### Detailed Description of the Invention and of particular embodiments

The present invention is directed towards a lightweight seat for high-density configurations.

The proposed seat comprises a support structure supporting (10) a seat pan (20) and a backrest 30.

The seat pan (20) comprises a rigid shell (21) which provides structural support to the seat pan 20, a lining (23) which is the surface intended to contact with the user, and an intermediate foam (22) located between the rigid shell (21) and the lining (23), providing cushioning to the seat pan 20.

Preferably, the backrest also comprises a rigid shell, a lining and an intermediate foam between the rigid shell and the lining.

The seat pan (20) has a vertical thickness equal to or less than 25mm, or equal to or less than 15mm in at least most of the surface of a rear portion (20A) of the seat pan (20), defined on at least one rear third of the seat pan (20) in a horizontal direction, and/or in at least left and right rear corner regions (20L, 20R) contained within a radius of at least 10 cm from the left and right rear corners of the seat pan (20).

The backrest (30) is articulated around an articulation joint (32), and the articulation joint (32) of the backrest (30) is located at a distance of between 100mm and 180mm, or between 120mm and 160mm above the upper surface of the seat pan (20).

The human back folds above the sacrum, in the lumbar region, therefore the folding of the backrest in the lowest portion of the backrest is not required. Having the articulated joint 32 at least 10cm above the upper surface of the seat pan, moves all the elements related to such articulated joint above the heigh of the knees of the user of the rear row, allowing for a further increase in the available space for the knees and an additional increase in comfort.

A front portion (20B) of the seat pan, covering at least a front third, or at least a front half, of the seat pan (20) in the horizontal direction, is a collapsible portion of the seat pan, adapted to be collapsable under the weight of a user of the seat.

According to the above, the thickness of the seat pan, measured in the vertical direction, is equal to or less than 25mm or 15mm at least in the indicated regions of the left and right rear corner regions, and also in most of the rear portion of the seat pan defined in the rear one third of the seat pan closest to the backrest 30.

The reduced thickness, especially in the left and right corer regions 20L, 20R, provides extra free space below the seat pan to introduce the knees of a user seated in a rear row of seats.

Also, a front portion (20B) of the seat pan, covering at least a front third, or at least a front half, of the seat pan (20) in the horizontal direction, is a collapsible portion of the seat pan, adapted to be collapsable under the weight of a user of the seat.

This increased compressible cushioning allows the user to push the legs down, compressing the wedge of intermediate foam, lowering the height of its knees while maintaining the back rested on the backrest. The lowered height of the knees in combination with the reduced thickness of the seat pan allows the user to introduce the knees below the seat pan of the front seat increasing its available space and comfort.

According to a preferred embodiment, in the left and right rear corner regions (20L, 20R), the rigid shell (21) of the seat pan (20) is raised in the vertical direction, in average, between 15mm and 40mm, or between 20mm and 30mm, in the vertical direction regards the rigid shell (21) located between said left and right rear corner regions (20L, 20R). This lowered portion of the rigid shell located between the left and right rear corner regions allows for an increased thickness of the intermediate foam where rests most of the weight of the user seated on the seat pan, increasing the comfort of the seat pan without reducing the available space for the knees under the left and right rear corner regions (20L, 20R).

Preferably, a lower portion (31) of the backrest (30), defined below the articulation joint (32), integrates an upward extension of the rigid shell (21) of the seat pan (20), said upward extension providing structural support for the lower portion 31 of the backrest in a very space effective manner.

The proposed invention further comprises, according to an optional embodiment, at least one elastic spring partially inserted in a housing defined in the lower portion (31) of the backrest (30) and partially inserted in a housing defined in an upper portion (33) of the backrest (30), defined above the articulation joint (32). Such elastic spring allows the user to push the backrest towards a reclined position, deforming the elastic spring, and returns the backrest 30 to the upward position when the user releases its pushing force.

A blocking mechanism, common in the industry, can be integrated in the seat to maintain the backrest in the upward position even against a pushing force when in the blocking position and to allow the reclining of the backrest when in a release position.

Optionally, the at least one elastic spring can be one of the following: a coil spring; or two nested counter-rotating coil springs, or a transversally flattened coil spring, or two nested and transversally flattened counter-rotating coil springs.

A transversally flattened coil spring is a coil spring which has been flattened in a transversal direction perpendicular to the central axis thereof, reducing its transversal width, reducing the required space of the housing.

According to a preferred embodiment, the support structure (10) may comprise at least two parallel vertical structures (11) and at least two horizontal tubular profiles (12), transversal to the vertical structures (11). The rigid shell (21) can be attached to the at least two horizontal tubular profiles (12).

The seat may further comprise a left foldable footrest (40) connected to one vertical structure (11), and a right foldable footrest (40) connected to the other vertical structure (11), both movable between a vertical fold position and a horizontal extended position, both left and right foldable footrests (40) being located below the rear portion of the seat pan for servicing a user of a seat located behind the seat.

The seat may further comprise a left foldable armrest (41) and a right foldable armrest (41) both movable between a vertical fold position and a horizontal extended position, the left and right foldable armrests (41) including an overload release mechanism set to lower the armrest (41) under loads greater than 30kg or greater than 20kg.

The left and right foldable armrests (41) may further include a friction retainer set to keep the armrest immobile, at any intermediate position between the vertical fold position and the horizontal extended position, under forces of less than 20kg, or less than 30kg.

According to a second aspect, the present invention is directed towards a cluster of adjacent seats for high-density configurations wherein a single support structure (10) supports all the adjacent seats of the cluster, each seat including some or all the features described above and described in any of the claims 1 to 9.

The cluster is an aggregation of several adjacent seats sharing at least the support structure to reduce the overall weight.

According to a preferred embodiment, the seats are three laterally adjacent seats.

This cluster of three seats may include four equally spaced armrests (41) corresponding to two intermediate armrests (41), located between adjacent seats, and two extreme armrests (41), located on the left and right sides of the cluster of seats.

According to an embodiment of the present invention, the central seat is centered between the intermediate armrests (41), the left seat of the cluster is closer, or between 30mm and 50mm closer, to the extreme armrest (41) of the left side of the cluster than to the adjacent intermediate armrest (41), and the right seat of the cluster is closer, or between 30mm and 50mm closer, to the extreme armrest (41) of the right side of the cluster than to the adjacent intermediate armrest (41).

This feature increases slightly the lateral distance between adjacent seats, without increasing the overall length of the cluster, defined by the distance between the left and right armrests.

According to another embodiment, the seat pans (20) of all the seats of the cluster share a single rigid shell (21). This single rigid shell provides a great strength and allows a reduction in the weight of the support structure.

## Claims

1. Lightweight seat for high-density configurations, the seat comprising:
a support structure (10) supporting a seat pan (20) and a backrest (30); wherein
the seat pan (20) comprises a rigid shell (21), a lining (23) and an intermediate foam (22) between the rigid shell (21) and the lining (23);
**characterized in that**
the seat pan (20) has an average vertical thickness equal to or less than 25mm, or equal to or less than 15mm, in at least most of the surface of a rear portion (20A) of the seat pan (20),
defined on at least one rear third of the seat pan (20) in a horizontal direction, and/or in at least left and right rear corner regions (20L, 20R) contained within a radius of at least 10 cm from the left and right rear corners of the seat pan (20); and
the backrest (30) is articulated around an articulation joint (32), and wherein the articulation joint (32) of the backrest (30) is located at a distance of between 100mm and 180mm, or
between 120mm and 160mm above the upper surface of the seat pan (20); and
a front portion (20B) of the seat pan, covering at least a front third, or at least a front half, of the seat pan (20) in the horizontal direction, is a collapsible portion of the seat pan, adapted to be collapsable under the weight of a user of the seat.

2. The seat according to claim 1 wherein in the left and right rear corner regions (20L, 20R), the rigid shell (21) of the seat pan (20) is raised in the vertical direction, in average, between 15mm and 40mm, or between 20mm and 30mm, regards the rigid shell (21) located between said left and right rear corner regions (20L, 20R).

3. The seat according to claim 1 or 2 wherein a lower portion (31) of the backrest (30), defined below the articulation joint (32), integrates an upward extension of the rigid shell (21) of the seat pan (20).

4. The seat according to claim 3 wherein at least one elastic spring is partially inserted in a housing defined in the lower portion (31) of the backrest (30) and is partially inserted in a housing defined in an upper portion (33) of the backrest (30), defined above the articulation joint (32), and wherein the at least one elastic spring is selected among: a coil spring; or two nested counter-rotating coil springs, or a transversally flattened coil spring, or two nested and transversally flattened counter-rotating coil springs.

5. The seat according to any preceding claim wherein the support structure (10) comprises at least two parallel vertical structures (11) and at least two horizontal tubular profiles (12), transversal to the vertical structures (11), wherein the rigid shell (21) is attached to the at least two horizontal tubular profiles (12).

6. The seat according to claim 5 wherein the seat further comprises a left foldable footrest (40) connected to one vertical structure (11), and a right foldable footrest (40) connected to the other vertical structure (11), both movable between a vertical fold position and a horizontal extended position, both left and right foldable footrests (40) being located below the rear portion of the seat pan for servicing a user of a seat located behind the seat, the left and right foldable footrests (40).

7. The seat according to any preceding claim wherein the seat further comprises a left foldable armrest (41) connected to one vertical structure (11), and a right foldable armrest (41) connected to the other vertical structure (11), both movable between a vertical fold position and a horizontal extended position, the left and right foldable armrests (41) including an overload release mechanism set to lower the armrest (41) under loads greater than 30kg or greater than 20kg.

8. The seat according to claim 7 wherein the left and right foldable armrests (41) include a friction retainer set to keep the armrest immobile, at any intermediate position between the vertical fold position and the horizontal extended position, under forces of less than 20kg, or less than 30kg.

9. The seat according to any preceding claim wherein a lower portion (31) of the backrest (30), defined below the articulation joint (32), integrates an upward extension of the rigid shell (21) of the seat pan (20), said upward extension providing structural support for the lower portion (31) of the backrest (30).

10. Cluster of adjacent seats for high-density configurations wherein a single support structure (10) supports all the adjacent seats of the cluster, each seat including all the features of any of the preceding claims 1 to 9.

11. The cluster of adjacent seats according to claim 10 wherein the seats are three seats, and include four equally spaced armrests (41) corresponding to two intermediate armrests (41) located between adjacent seats and two extreme armrests (41) located on the left and right sides of the cluster of seats, wherein the central seat is centered between the intermediate armrests (41), the left seat of the cluster is closer, or between 30mm and 50mm closer, to the extreme armrest (41) of the left side of the cluster than to the adjacent intermediate armrest (41), and the right seat of the cluster is closer, or between 30mm and 50mm closer, to the extreme armrest (41) of the right side of the cluster than to the adjacent intermediate armrest (41).

12. The cluster of adjacent seats according to claim 10 or 11 wherein the seat pans (20) of all the seats of the cluster share a single rigid shell (21).
